# EUROPÄISCHE PATENTANMELDUNG

(11) **EP 0 859 177 A1**
(43) Veröffentlichungstag der Anmeldung: **19.08.1998**
(21) Anmeldenummer: 98101601.7
(22) Anmeldetag: 30.01.1998
(51) Int. Cl.: F16K 27/02, F16K 1/226

(54) **Ventilklappe**

(30) Priorität: 04.02.1997 IT MI970070 U
(71) Anmelder: F.lli Tassalini Officina Meccanica S.p.A., 20068 Peschiera Borromeo (Milano) (IT)
(72) Erfinder: Tassalini, Erminio, 20063 - Cernusco S.N. (MI) (IT); Tassalini, Augusto, 20149 Milano (IT)
(74) Vertreter: Jaumann, Paolo

(57) **Zusammenfassung**

Ventilklappe, bestehend aus zwei Halbschalen (1 und 2), die durch zwei Schrauben (7) mit Flanschen (5) verbunden sind, die fuer Verschweissung oder fuer Gewindeenden geeignet sind.

## Beschreibung

Vorliegende Erfindung betrifft eine Ventilklappe, die zur Verwendung in den Anlagen der Lebensmittel- und der Weinbauindustrie, sowie der chemischen und pharmazeutischen Industrie geeignet ist.

Die bekannten Ventilklappen weisen den Nachteil der beschwerlichen Auswechslung der Dichtungen auf.

Gegenueber diesen bekannten Ventilklappen gestattet die vorliegende Erfindung, durch den Verschluss von zwei Halbschalen mittels Schrauben, den gleichzeitigen Verschluss von beiden Enden, sowie die einwandfreie Aufnahme der Dichtung.

Die durch Aufschraubung besonders leichte Demontage gestattet die eventuelle Auswechslung der Dichtungen, ohne dass die Demontage der Leitungen erforderlich ist.

Ausserdem koennen Schweissenden oder Gewindeenden montiert werden.

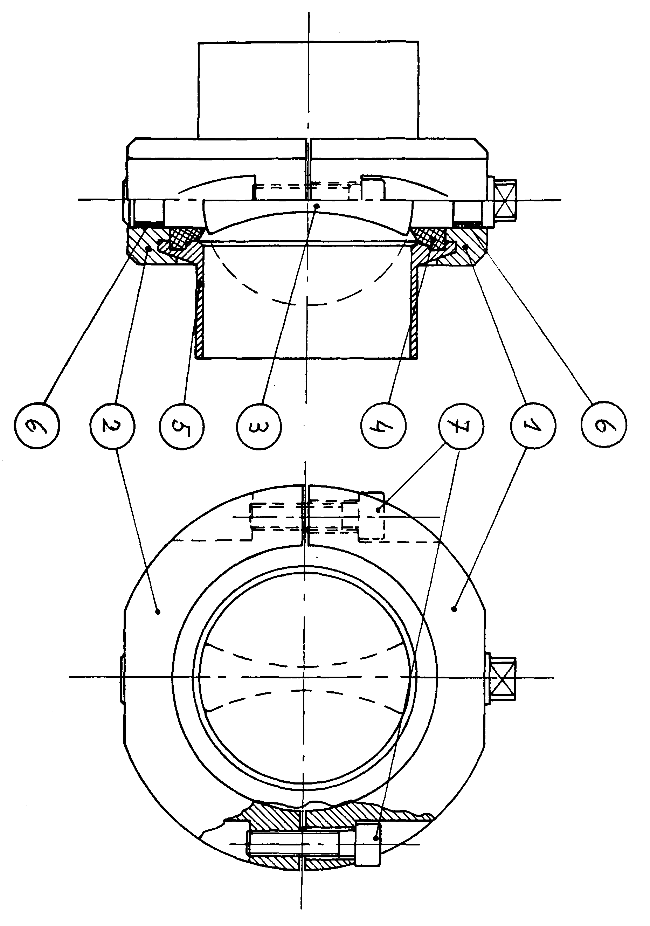

Eine erfindungsgemaesse Ventilklappe wird anhand der Zeichnung beschrieben.

Die Ventilklappe besteht aus einer oberen Halbschale (1) und aus einer unteren Halbschale (2).

Die obere Halbschale (1) wird an der unteren Halbschle (2) mittels zwei Schrauben (7) verbunden. Beide Halbschalen enthalten eine Bohrung, die die Aufnahne des Schieberbolzens (3) ermoeglicht.

Die Halbschalen (1 und 2) besitzen eine besondere Form, die die Verbindung sowie das Blockieren der Flanschen (5) mit der zwischenliegenden Dichtung (4) gestattet.

Der aus rostfreiem Stahl geformte Schieber ist an den zwei Bolzen bearbeitet, unter Zwischenschaltung von zwei Huelsen (6) aus Teflon.

Die Dichtung (4) kann aus verschiedenen Elastomeren sowie in verschiedenen Formen hergestellt werden, jedoch mit zwei senkrechten Bohrungen fuer die Aufnahme des Schieberbolzens.

Die Flanschen (5) koennen verschiedene Abmessungen und auf dem Markt uebliche Normungen aufweisen. Die erfindungsgemaesse Klappe kann manuell oder pneumatisch betrieben werden.

## Patentansprüche

1. Ventilklappe, dadurch gekennzeichnet, dass sie aus einer oberen Halbschale (1) und einer unteren Halbschale (2) besteht.

2. Ventilklappe, gemaess Anspruch 1, dadurch gekennzeichnet, dass die beiden Halbschlaen (1 und 2) durch zwei Schrauben (7) verbunden sind.

3. Ventilklappe, gemaess den Anspruechen 1 und 2, dadurch gekennzeichnet, dass der Schieber aus rostfreiem Stahl an zwei Bolzen bearbeitet ist, unter Zwischenschaltung von zwei Huelsen aus Teflon (6).

4. Ventilklappe, gemaess den hervorgehenden Anspruechen, dadurch gekennzeichnet, dass die Flanschen (5) Schweissenden oder Gewindeenden aufweisen.
